# DEMANDE DE BREVET EUROPEEN

(11) **EP 0 602 402 A1**
(43) Date de publication de la demande: **22.06.1994**
(21) Numéro de dépôt: 93118549.0
(22) Date de dépôt: 18.11.1993
(51) Int. Cl.: H01L 41/09

(54) **Moteur piézo-électrique à rotor intégré dans le stator**

(30) Priorité: 25.11.1992 CH 3612/92
(71) Demandeur: ASULAB S.A., CH-2501 Bienne (CH)
(72) Inventeur: Racine, Georges-André, CH-2300 La Chaux-de-Fonds (CH); Luthier, Roland, CH-1025 Saint-Sulpice (CH)
(74) Mandataire: de Montmollin, Henri

(57) **Abrégé**

L'invention concerne un moteur piézo-électrique. Ce moteur piézo-électrique comprend un stator (2) comportant des moyens piézo-électriques (10) susceptibles de provoquer un mouvement vibratoire du stator, et un rotor (4) monté en rotation par rapport au stator (2), ce rotor (4) étant apte à se déplacer en rotation sous l'action du mouvement vibratoire du stator (2), ce moteur étant caractérisé en ce que le stator (2) comporte un logement (6) à l'intérieur duquel est disposé le rotor (4). Ce moteur s'applique aux dispositifs de faible épaisseur.

## Description

La présente invention concerne un moteur piézo-électrique, et plus particulièrement un moteur piézo-électrique dans lequel le rotor est logé à l'intérieur du stator.

Les moteurs piézo-électriques classiques comportent, d'une part, un stator sur lequel sont montés des moyens piézo-électriques, tels qu'une céramique polarisée pourvue d'électrodes d'excitation pouvant être alimentées électriquement, et d'autre part, un rotor qui repose axialement sur le stator et qui est monté en rotation, par rapport à celui-ci, autour d'un axe d'entraînement lié mécaniquement à un mécanisme à entraîner.

Sous l'effet de l'excitation électrique reçue des électrodes, la céramique transmet un mouvement vibratoire au stator qui provoque le déplacement en rotation du rotor disposé en appui élastique sur celui-ci.

Dans ce type d'agencement, le rotor et la partie vibrante du stator sont formés selon une configuration "ouverte" et ils sont donc accessibles depuis l'extérieur.

Ainsi, des impuretés peuvent venir se loger entre la partie vibrante et le rotor, et sont susceptibles de perturber le déplacement en rotation de ce dernier. Qui plus est, ce type d'agencement à cause du frottement du rotor sur le stator, est soumis à une usure normale, si bien qu'il fournit des particules sous forme de poussières qui peuvent perturber le fonctionnement des éléments environnants.

Enfin, le rotor et la partie vibrante du stator étant facilement accessibles de l'extérieur, ils peuvent être endommagés lors de leur manipulation ou du montage.

Ainsi, la présente invention a-t-elle pour but de fournir un moteur piézo-électrique qui soit protégé des poussières extérieures et qui ne perturbe pas non plus son environnement, tout en ayant une conception telle qu'il puisse être facilement manipulé, sans être endommagé.

De plus, la présente invention a pour but de fournir un moteur miniaturisé, de très faible épaisseur, pouvant équiper des systèmes de très faibles dimensions, telles que des pièces d'horlogerie.

A cet effet, la présente invention a pour objet un moteur piézo-électrique du type comprenant :
- un stator comportant des moyens piézo-électriques susceptibles de provoquer un mouvement vibratoire du stator, et
- un rotor monté en rotation par rapport au stator, ce rotor étant apte à se déplacer en rotation sous l'action du mouvement vibratoire du stator, caractérisé en ce que ledit stator comporte un logement à l'intérieur duquel est disposé ledit rotor.

Selon une autre caractéristique de l'invention, on précisera que le logement est formé par une cavité creusée directement dans le corps du stator.

Selon encore une autre caractéristique, le rotor repose axialement dans le fond de ladite cavité qui a une forme de membrane contre laquelle sont assujettis extérieurement les moyens piézo-électriques.

Mais d'autres caractéristiques et avantages de l'invention apparaîtront plus clairement à la lecture de la description détaillée qui suit, faite en référence aux dessins annexés qui représentent à titre d'exemple un mode de réalisation de la présente invention, et dans lesquels :
- La figure 1 est une vue en perspective éclatée d'un moteur piézo-électrique selon l'invention, mais dans laquelle le rotor a été omis pour des raisons de clarté des dessins,
- la figure 2 est une vue partielle en coupe du moteur piézo-électrique selon l'invention, faite selon la ligne II-II de la figure 1, des éléments de contact électrique entre le stator et son support ayant été ramenés dans cette figure pour faciliter la compréhension de l'invention,
- la figure 2A est une vue agrandie de la région A de la figure 2, représentant de façon plus détaillée des moyens piézo-électriques ménagés sous le stator du moteur selon l'invention, et
- la figure 3 est une vue de dessus d'un disque souple ajouré formant le rotor du moteur, tel que représenté à la figure 2.

En se référant aux figures annexées, on décrira ci-après un mode de réalisation d'un moteur piézo-électrique selon l'invention, repéré par la référence générale 1.

Le moteur 1 comporte un stator 2 dont la partie vibrante 2a est réalisée dans une plaquette de silicium micro-usinée, de forme extérieure parallélipédique.

Le moteur 1 comporte en outre un rotor 4 qui est monté à rotation par rapport au stator 2, autour d'un axe géométrique de rotation X.

Le stator 2 comporte une cavité ou "baignoire" 6 ménagée dans l'essentiel de son épaisseur et destinée à former un logement à l'intérieur duquel est disposé le rotor 4. La cavité 6 qui présente une forme circulaire est creusée directement dans le corps du stator 2 par une technique de micro-usinage de volume, réalisée plus particulièrement par une attaque chimique du silicium sur une période de temps donnée. Cette technique d'usinage du silicium étant classique, elle ne sera pas ici décrite de façon plus détaillée.

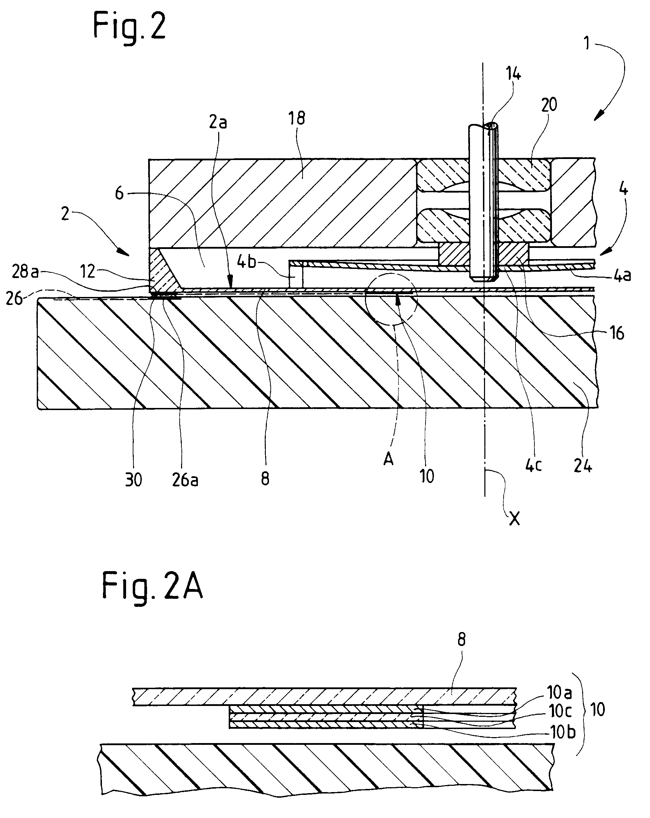

Comme on le voit plus particulièrement à la figure 2, le rotor 4 repose axialement dans le fond de la cavité 6, fond qui a une forme de membrane 8 contre laquelle sont assujettis extérieurement des moyens piézo-électriques 10 et qui forme la partie vibrante 2a du stator 2.

La membrane 8 présente une épaisseur très faible, entre 0,01 mm et 0,02 mm (à savoir entre 10 µm et 20 µm ou 10.10⁻⁶ mètres et 20.10⁻⁶ mètres)
Les moyens piézo-électriques 10 qui sont conformés pour provoquer un mouvement vibratoire du stator 2, et plus particulièrement de la membrane 8, sont réalisés par dépôt de couches minces comportant deux couches métalliques 10a et 10b, notamment réalisées en aluminium et formant électrodes, et une couche 10c d'un matériau piézo-électrique, par exemple de l'oxyde de zinc (ZnO), cette dernière étant interposée entre les deux autres. Le fonctionnement de ces moyens piézo-électriques 10 est classique et il ne sera pas décrit ici de façon plus détaillée.

On remarquera sur la figure 2 que les moyens piézo-électriques 10 sont disposés contre la membrane 8 à l'extérieur de celle-ci et que, grâce au dépôt en couches minces, ces moyens ne forment qu'une très faible surépaisseur sur la membrane 8, de l'ordre de 0,005 mm (à savoir 5µm ou 5.10⁻⁶ mètres).

Le stator 2 comporte de plus un pourtour périphérique qui a une forme de couronne de renforcement, référencée 12, qui constitue l'ossature mécanique du stator 2 et lui confère sa résistance.

La cavité 6, quant à elle, se présente sous la forme d'une cuvette tronconique qui s'évase et qui est ouverte vers l'extérieur, et notamment vers le haut dans la position du moteur représentée à la figure 2. Comme on le remarque sur cette figure, le rotor 4 est intégralement contenu dans le stator 2, dans son épaisseur et plus particulièrement dans le logement 6, si bien que l'ensemble stator 2 - rotor 4 ne forme aucune surépaisseur sur le moteur et constitue une unité intégrée, par imbrication d'un élément dans l'autre.

Plus particulièrement, la membrane 8 et le pourtour 12 en forme de couronne du stator viennent de matière, puisque réalisés ensemble à partir d'une même plaquette et obtenus par attaque chimique de celle-ci.

Le rotor 4 est monté à rotation par rapport au stator 2 par l'intermédiaire d'un axe d'entraînement 14 comportant des moyens d'entraînement mécaniques, non représentés, tel qu'un pignon extérieurement denté.

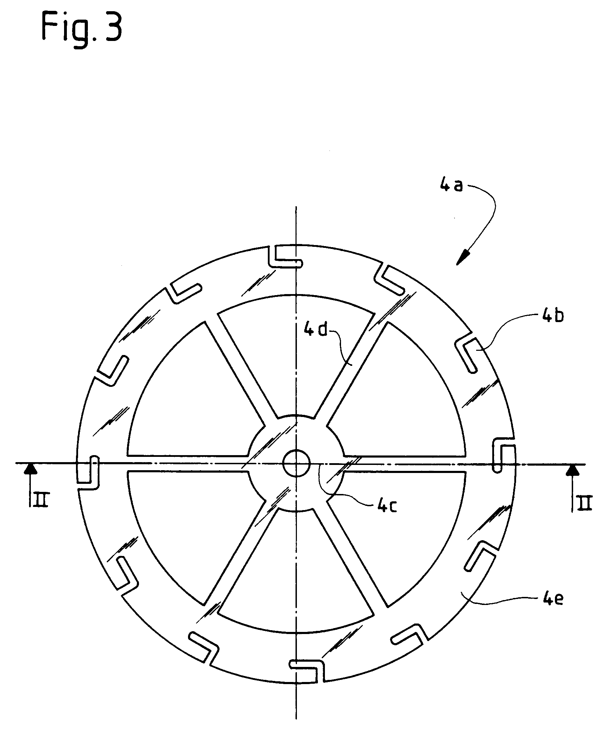

Le rotor 4 est dans cet exemple réalisé sous la forme d'un disque souple ajouré 4a (figure 3) comportant des pattes inclinées 4b (une seule étant référencée) aboutant sur la membrane 8 du stator 2. Ce rotor 4 est assujetti fixement à une bague de fixation 16, par soudage ou par collage.

A cet effet, le rotor 4, et plus particulièrement le disque 4a comporte un moyeu central 4c à partir duquel s'étendent plusieurs bras d'élasticité 4d solidaires d'une bague annulaire 4e dans laquelle sont ménagées directement les pattes 4b. La bague de fixation 16 est assujettie au moyeu central 4c. L'axe 14 est monté en rotation dans un couvercle 18 de forme parallélipédique, par l'intermédiaire de deux moyens de guidage en rotation 20, formés ici classiquement par des pierres.

On notera ici que dans un mode de réalisation non représenté ces moyens de guidage 20 peuvent être consitués par un tube chassé dans le couvercle 18.

Le couvercle 18 est réalisé en un matériau métallique, tel que du laiton et il repose sur la couronne périphérique 12 du stator 2, et il est fixé à celle-ci par collage. Le couvercle 18 ferme complètement la cavité 6 formant le logement à l'intérieur duquel est reçu le rotor 4, et notamment le disque souple ajouré 4a associé à la bague 16. A cet effet, le couvercle 18 et le stator 2, et plus particulièrement la couronne de renforcement 12, comportent des moyens de positionnement 22 formés par plusieurs rainures en V orientées deux à deux à 90°, ménagées directement dans la couronne de renforcement 12. Ces moyens comportent par ailleurs des plots mâles ou des billes (non représentés) solidaires du couvercle 18 et venant se loger respectivement dans les rainures.

Les électrodes 10a et 10b sont respectivement reliées à des pistes électriquement conductrices 28a et 28b de même réalisées en aluminium et déposées sous formes de couches minces sous la membrane 8, lors du dépôt des électrodes 10a, 10b et 10c, par des jeux de masques appropriés, non représentés.

Par ailleurs, le stator 2 est relié et assujetti fixement à une plaque de circuit imprimé 24 comportant des pistes de connexion électriques 26a et 26b réalisées classiquement par un dépôt de cuivre. Les pistes 26a et 26b sont conformées sur la plaque de circuit imprimé pour venir en partie en coïncidence respectivement avec les pistes 28a et 28b du stator. Ainsi, le stator 2 est relié électriquement et mécaniquement à la plaque du circuit imprimé 24 par l'intermédiaire de plots de collage 30 réalisés notamment par une colle conductrice époxy.

Les plots de collage 30 sont donc disposés respectivement entre les pistes de connexion 26a, 26b et les pistes d'alimentation 28a, 28b appartenant respectivement au stator 2 et à la plaque de circuit imprimé 24.

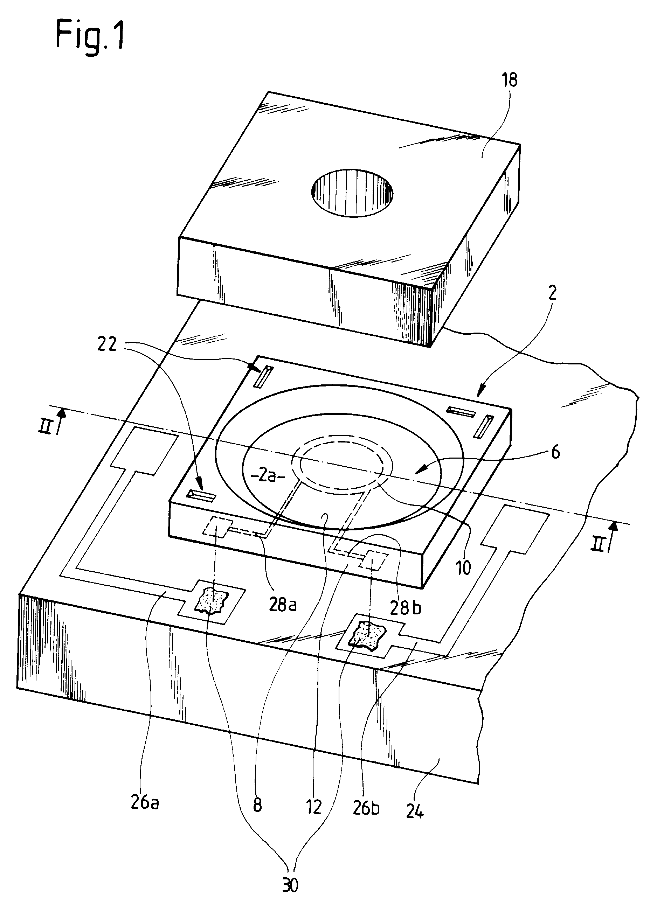

Comme on le voit sur la figure 1, seules les pistes 26a et 26b sont accessibles de l'extérieur pour permettre l'alimentation électique du moteur. Les moyens piézo-électriques 10 ainsi que les pistes d'alimentation 28a et 28b des électrodes 10a et 10b sont disposés entre la plaque de circuit imprimé 24 et le stator 2.

On précisera aussi que dans un mode de réalisation particulier, non représenté, le stator 2 peut comporter des pistes de détection ménagées au proche des moyens piézo-électriques 10.

On comprend ainsi de l'agencement qui vient d'être décrit que le moteur piézo-électrique selon l'invention se présente sous la forme d'un module ou plaquette monobloc et compacte dont ne sont accessibles de l'extérieur que les pistes de connexion électrique 26a, 26b et l'axe d'entraînement 14, et ce pour assurer la liaison électrique et mécanique du moteur avec l'extérieur. Tous les autres éléments, à savoir le rotor 4, et plus particulièrement le disque souple 4a, la membrane 8 ainsi que les moyens piézo-électriques 10 et ses électrodes d'alimentation 28a, 28b sont cachés et protégés, et ne sont pas accessibles de l'extérieur. Le rotor 4 est protégé de façon hermétique à l'intérieur du stator 2, via le couvercle 18 et aucun élément de poussière ne peut entrer à l'intérieur, ni sortir de la cavité 6. On remarque par ailleurs que cet ensemble très compact et intégré peut être réalisé dans une épaisseur extrêmement faible et présente donc un encombrement réduit.

## Revendications

1. Moteur piézo-électrique du type comprenant :
- un stator (2) comportant des moyens piézo-électriques (10) susceptibles de provoquer un mouvement vibratoire du stator, et
- un rotor (4) monté en rotation par rapport au stator (2), ce rotor (4) étant apte à se déplacer en rotation sous l'action du mouvement vibratoire du stator (2), caractérisé en ce que ledit stator (2) comporte un logement (6) à l'intérieur duquel est disposé ledit rotor (4).

2. Moteur selon la revendication 1, caractérisé en ce que ledit logement (6) est formé par une cavité creusée directement dans le corps du stator (2).

3. Moteur selon la revendication 2, caractérisé en ce que le rotor (4) repose axialement dans le fond de ladite cavité qui a une forme de membrane (8) contre laquelle sont assujettis extérieurement lesdits moyens piézo-électriques (10).

4. Moteur selon la revendication 3, caractérisé en ce que la membrane (8) est reliée au pourtour du stator qui présente une forme de couronne de renforcement (12).

5. Moteur selon la revendication 4, caractérisé en ce que la membrane (8) et le pourtour du stator en forme de couronne (12) viennent de matière.

6. Moteur selon l'une des revendications 2 à 5, caractérisé en ce que ladite cavité (6) et la membrane (12) sont formés par micro-usinage, le stator étant en un matériau tel que du silicium.

7. Moteur selon l'une des revendications 2 à 6, caractérisé en ce que la cavité (6) formant ledit logement à l'intérieur du stator (2) est fermée par un couvercle (18) qui porte, guidé en rotation, un axe d'entraînement (14) solidaire du rotor.

8. Moteur selon la revendication 7, caractérisé en ce que le couvercle (18) repose axialement sur le pourtour du stator en forme de couronne (12) et est assujetti au stator (2) par l'intermédiaire de moyens de positionnement.

9. Moteur selon l'une des revendications 4 à 8, caractérisé en ce que le stator (8) est lié mécaniquement et électriquement à une plaque de circuit imprimé (24) par l'intermédiaire de ladite couronne de renforcement (12).
